# FASCICULE DE BREVET EUROPEEN

(11) **EP 3 727 648 B1**
(45) Date de publication et mention de la délivrance du brevet: **07.02.2024**
(21) Numéro de dépôt: 18839693.1
(22) Date de dépôt: 17.12.2018
(51) Int. Cl.: B01D 53/22, F25J 3/02, B01D 53/04, B01D 53/047

(54) **PROCÉDÉ DE DISTILLATION D'UN COURANT GAZEUX CONTENANT DE L'OXYGÈNE**
VERFAHREN ZUM DESTILLIEREN EINES SAUERSTOFFHALTIGEN GASSTROMS
METHOD FOR DISTILLING A GAS STREAM CONTAINING OXYGEN

(30) Priorité: 21.12.2017 FR 1762860
(43) Date de publication de la demande: 28.10.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: TERRIEN, Paul, Houston, Texas TX 77024 (US); CHANTANT, Nicolas, 38360 Sassenage (FR)
(74) Mandataire: Air Liquide
(86) Numéro de dépôt international: PCT/FR2018/053339
(87) Numéro de publication internationale: WO 2019/122661

(56) Documents cités:
- WO-A1-2017/109305
- WO-A1-2017/203112
- CA-A1- 2 698 007
- FR-A1- 2 917 489
- FR-A1- 2 971 332

## Description

L'invention a pour objet un procédé de production de bio méthane par épuration de biogaz, par exemple de biogaz issu d'installations de stockage de déchets non-dangereux (ISDND). Elle concerne également une installation pour la mise en oeuvre du procédé.

Plus précisément, la présente invention est relative à un procédé de traitement par couplage d'une perméation membranaire et d'une distillation cryogénique d'un courant gazeux contenant au moins du méthane, du dioxyde de carbone, des gaz de l'air (azote et oxygène) et des polluants (H₂S et composés organiques volatils (COV)). L'objectif est de produire un courant gazeux riche en méthane dont la teneur en méthane est conforme aux besoins de son utilisation et de limiter au maximum l'impact des rejets de CH₄ dans l'atmosphère (gaz à fort pouvoir à effet de serre).

L'invention concerne en particulier l'épuration de biogaz issu des installations de stockage de déchets non-dangereux, ci-après ISDND (Installation de Stockage des Déchets Non Dangereux), dans le but de produire du biométhane conforme à l'injection dans un réseau de gaz naturel ou en utilisation locale comme carburant véhicule.

La digestion anaérobique des déchets organiques présents dans les ISDND produit une quantité importante de biogaz pendant toute la durée d'exploitation de l'ISDND et même plusieurs années après l'arrêt de l'exploitation et la fermeture de l'ISDND. De par ses constituants principaux -méthane et dioxyde de carbone- le biogaz est un puissant gaz à effet de serre ; il constitue aussi, parallèlement, une source d'énergie renouvelable appréciable dans un contexte de raréfaction des énergies fossiles.

Le biogaz contient plusieurs composés polluants et doit être épuré pour permettre une valorisation commerciale. Il existe plusieurs procédés permettant d'effectuer la récupération et la purification du biogaz.

Le biogaz contient majoritairement du méthane (CH₄) et du dioxyde de carbone (CO₂) dans des proportions variables en fonction du mode d'obtention.

Dans le cas du biogaz d'ISDND, le gaz contient en outre une proportion de gaz de l'air (azote et oxygène) ainsi que dans une moindre proportion, de l'eau, de l'hydrogène sulfuré, et des composés organiques volatiles (COV). Selon les matières organiques dégradées, les techniques utilisées et les conditions particulières (climats, typologies...) de chaque ISDND, les proportions des composants du biogaz diffèrent. Néanmoins, en moyenne, le biogaz comporte, sur gaz sec, de 30 à 60% de méthane, de 15 à 50% de CO₂, de 0 à 30% d'azote, de 0 à 6% d'oxygène, de 0 à 1% d'H₂S et de quelques dizaines à quelques milliers de milligrammes par normaux mètres cubes de COV et un certain nombre d'autres impuretés à l'état de trace.

Le biogaz est valorisé de différentes manières. Il peut, après un traitement partiel, être valorisé à proximité du site de production pour fournir de la chaleur, de l'électricité ou les deux cumulées (la cogénération). La teneur importante en dioxyde de carbone et en azote réduit son pouvoir calorifique, augmente les coûts de compression et de transport et limite l'intérêt économique de sa valorisation à cette utilisation de proximité.

Une purification plus poussée du biogaz permet sa plus large utilisation. En particulier, une purification poussée du biogaz permet d'obtenir un biogaz épuré aux spécifications du gaz naturel et qui pourra lui être substitué. Le biogaz ainsi purifié est appelé « biométhane ». Le biométhane complète ainsi les ressources de gaz naturel avec une partie renouvelable produite au coeur des territoires. Il est utilisable pour exactement les mêmes usages que le gaz naturel d'origine fossile. Il peut alimenter un réseau de gaz naturel, une station de remplissage pour véhicules.

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Il est à noter que, en fonction des pays, les réglementations environnementales imposent souvent des contraintes concernant les rejets à l'atmosphère.

Il est en effet nécessaire de mettre en place des technologies permettant de limiter les impacts des gaz à effet de serre (CH₄) et des polluants (H₂S et COV) contenu dans le biogaz. Il est donc important d'avoir un rendement CH₄ élevé (égal, en masse, à la quantité de CH₄ valorisée rapportée à la quantité de CH₄ contenue dans le biogaz) et de prévoir des systèmes de traitement pour l'H₂S et les COV qui évitent les rejets atmosphériques.

Par ailleurs, une problématique supplémentaire reste la présence d'0₂, qui, lors de la séparation du mélange, peut générer une atmosphère explosive pendant les différentes étapes d'enrichissement. Ce risque de création d'un mélange explosif rend le biogaz de décharge particulièrement difficile à épurer de manière sûre et économique.

Le document US 8 221 524 B2 décrit un procédé d'enrichissement en CH₄ d'un gaz, à hauteur de 88% par différente étapes de recyclage. Le procédé consiste à compresser le flux gazeux, puis à le faire passer sur un adsorbant pour éliminer les COV. Le flux gazeux est ensuite soumis à une étape de séparation membranaire puis à une étape d'adsorption modulée en pression (PSA). L'adsorbant mis en oeuvre dans le PSA est du type CMS (carbon molecular sieve) et permet d'éliminer l'azote et une petite partie de l'oxygène.

Le document EP1979446 décrit un procédé d'épuration de biogaz consistant à éliminer l'H₂S, à compresser le gaz, à le filtrer pour éliminer les particules Le gaz est ensuite soumis à une étape de séparation membranaire pour éliminer le CO₂ et l'O₂, de séchage par passage dans un PSA puis dans différents filtres puis enfin de nouveau dans un PSA pour éliminer l'azote. Le gaz est finalement liquéfié.

Le document US2004/0103782 décrit un procédé d'épuration de biogaz consistant à éliminer à compresser le gaz, le filtrer pour éliminer les particules, à le soumettre à une étape d'adsorption modulée en pression (PSA) pour éliminer les COV, puis à une séparation membranaire pour éliminer la majeure partie du CO₂ ainsi qu'une fraction de l'oxygène.

Le document US 5486227 décrit un procédé de purification et de liquéfaction d'un mélange gazeux consistant à soumettre le flux à une adsorption modulée en température (TSA) pour éliminer l'H₂S notamment, puis à une adsorption modulée en pression (PSA) pour éliminer le CO₂ notamment, puis enfin à une séparation cryogénique pour éliminer l'azote et ne retenir que le méthane.

Les documents US5964923 et US5669958 décrivent un procédé de traitement d'un effluent gazeux consistant à déshydrater le gaz, à le condenser en le passant dans un échangeur, à soumettre le gaz à une séparation membranaire, puis à une séparation cryogénique.

Le document US2010/077796 décrit un procédé de purification consistant à soumettre le flux gazeux à une séparation membranaire, à traiter le perméat dans une colonne à distiller, puis à mélanger le méthane gaz provenant de la colonne, après vaporisation, avec le rétentat obtenu à l'issue de la séparation membranaire.

Les documents US3989478 et FR2917489 décrivent des systèmes cryogéniques pour l'épuration d'un flux riche en méthane. Ces deux systèmes utilisent un système d'adsorption pour abattre le CO₂ avant l'étape de liquéfaction.

Dans le document US3989478, la régénération des systèmes d'adsorption est effectuée par le biais du distillat riche en azote récupéré en tête de colonne de distillation. Dans le document FR2917489, la régénération du système d'adsorption est effectuée par le méthane liquide soutiré en bas de colonne de distillation.

Le document EP0772665 décrit l'utilisation d'une colonne de distillation cryogénique pour la séparation du gaz de mine composé principalement de CH₄, CO₂ et azote.

Le document WO 2017/109305 A1 décrit un procédé de production de biométhane par épuration de biogaz. Aucun des documents cités ne permet de résoudre le problème de fournir du biométhane sans risque lié à l'O₂, à une concentration en méthane supérieure à 95%, une concentration en CO₂ inférieure à 2,5% et avec un rendement méthane supérieur à 85%.

Un des problèmes que se propose donc de résoudre l'invention est celui de fournir un procédé de purification de biogaz respectant les contraintes ci-dessus, c'est-à-dire un procédé qui soit sûr, avec un rendement optimal, produisant un biométhane de haute qualité substituable au gaz naturel et qui respecte les normes environnementales s'agissant notamment de la destruction des composées polluants comme les COV et des composés à fort pouvoir à effet de serre comme le CH₄. Le gaz ainsi produit pourra être valorisé sous forme gazeuse soit en injection dans un réseau de gaz ou alors pour des applications de mobilité.

Par ailleurs, dans l'art antérieur, il est connu de traiter du biogaz dans une unité de purification de gaz pouvant utiliser les étapes suivantes : un PSA (Pressure Swing Adsorption), un tamis d'adsorbant (pour enlever les COV) et un étage membranaire.

Le CO₂ est majoritairement enlevé sur l'étape membranaire. Cette séparation imparfaite laisse dans le gaz dit épuré une teneur en CO₂ fréquemment comprise entre 0,5% mol et 1,5% mol. Il est possible de réduire la teneur en CO₂dans le gaz purifié en sur dimensionnant l'unité de séparation (impliquant une consommation plus importante du compresseur). Dans tous les cas la teneur en CO₂ dans le gaz purifié ne pourra jamais être fortement inférieure (même ordre de grandeur de concentration).

Ce gaz purifié contenant, entre autre, le restant de CO₂, du méthane, un peu d'oxygène et de l'azote (entre 1% et 20%mol) est ensuite traité dans une unité cryogénique.

Les températures atteintes dans cette unité sont de l'ordre de -100°C voir inférieures, ce qui à basse pression (entre Patm et une trentaine de bar) entraine une solidification du CO₂ contenu dans le gaz à traiter.

Une solution fréquemment employée est d'utiliser une étape de purification basée sur la technologie d'adsorption (TSA, Température Swing Adsorption). Cette technologie permet d'atteindre des teneurs en CO₂ très faibles (par exemple 50ppmv dans le cas d'un gaz naturel liquéfié). A ces teneurs le CO₂ ne se solidifie pas aux températures considérées même à basse pression car il est encore soluble dans le méthane. Cependant cette unité de purification est relativement onéreuse et nécessite l'utilisation d'un gaz dit de régénération pour pouvoir évacuer le CO₂ arrêté. Le gaz fréquemment utilisé est soit l'azote qui aura été séparé dans l'étape cryogénique, soit le produit méthane en sortie de NRU. Si on utilise l'azote, il est possible qu'il faille dégrader le rendement de l'unité ou ajouter de l'azote pour arriver à obtenir le débit requis. Si on utilise le méthane de la production, des pics de concentration de CO₂ lié à la désorption peuvent apparaitre rendant le gaz hors des spécifications.

Par ailleurs, le gaz issu d'une décharge ou d'une unité de production de biogaz, contient de l'oxygène (valeur typique entre 0% et 1% mol d'oxygène, mais potentiellement plus).

Cet oxygène est partiellement éliminé dans les étapes de prétraitement notamment celle des membranes qui consiste à enlever le CO₂. Durant cette étape, la quantité d'oxygène en valeur absolue diminue mais sa concentration elle augmente ou reste constante.

L'oxygène entrant dans la partie cryogénique risque de se concentrer à certains endroits tel que la colonne de distillation. En effet la volatilité de l'oxygène est comprise entre celle de l'azote et celle du méthane. Il est donc tout à fait possible de créer des zones de concentration de l'oxygène dans la colonne à distiller. Cette concentration, si elle n'est pas maîtrisée peut atteindre des valeurs susceptibles d'entrainer une inflammation, voire une explosion du mélange de gaz. Il s'agit d'un risque sécurité d'une importance majeure que les inventeurs de la présente invention ont cherché à limiter au maximum.

Il existe donc un besoin d'améliorer les procédés tels que décrits ci-dessus tout en réduisant les coûts d'opération.

Les inventeurs de la présente invention ont alors mis au point une solution permettant de résoudre les problèmes soulevés ci-dessus.

La présente invention a pour objet un procédé de production de biométhane par épuration d'un courant d'alimentation de biogaz comprenant les étapes suivantes :
Etape a) : introduction du courant gazeux d'alimentation dans une unité de prétraitement dans laquelle ledit courant gazeux est séparé partiellement du CO₂ et de l'oxygène qu'il contient et est comprimé à une pression P1 supérieure à 25 bars abs, mais de préférence supérieure à 50 bars abs ;
Etape b) : on introduit le courant gazeux issu de l'étape b) appauvri en CO₂, à une séparation cryogénique dans une colonne de distillation pour séparer l'azote dudit courant gazeux, ladite colonne de distillation comprenant n plateaux, n étant un nombre entier compris entre 8 et 100 ;
Etape c) : on récupère un courant enrichi en CH₄ issu de la séparation cryogénique par pompage du produit de cuve de ladite colonne à une pression P2 supérieure à 25 bars abs mais de préférence supérieure à la pression critique dudit produit, caractérisé en ce que le courant gazeux issu de l'étape a) appauvri en CO₂ mis en oeuvre à l'étape b) a une concentration en oxygène égale à C1 et en ce que :
   - lorsque C1 est strictement supérieure à 1% molaire, le procédé est arrêté ; et
   - lorsque C1 est strictement supérieure à 0,1 % molaire, le courant gazeux issu de l'étape a) appauvri en CO₂ mis en oeuvre à l'étape b) est introduit dans la colonne de distillation à un niveau compris entre le plateau n-4 et le plateau n, le plateau n étant le plateau situé le plus haut dans ladite colonne.

Les colonnes à distiller ont une forme cylindrique, leur hauteur est toujours très grande comparée à leur diamètre. Les plus utilisées sont équipées de plateaux.

Les plateaux d'une colonne ont pour objectif de mettre en contact le liquide, qui redescend par gravité, avec la vapeur qui monte. Ils comportent une aire active percée de trous, éventuellement équipés de clapets ou de cloches, d'un barrage permettant de retenir sur le plateau une certaine épaisseur de liquide, d'un déversoir permettant d'amener le liquide du plateau considéré vers le plateau inférieur.

La solution objet de la présente invention est donc de ne pas réduire d'avantage la teneur en CO₂ en sortie de l'étape membranaire tout en assurant une solubilité suffisante du CO₂ dans le gaz à traiter (principalement du méthane) afin d'éviter une cristallisation et cela en tout point du procédé.

L'étape de TSA pour abattre majoritairement le CO₂ est donc retirée. Le gaz qui alimente la section cryogénique contient donc entre 0,3%mol et 2% mol de CO₂.

Par ailleurs, la solution objet de la présente invention, permet de limiter l'accumulation d'oxygène lors de la distillation.

Selon d'autres modes de réalisation, l'invention a aussi pour objet :
- Un procédé tel que défini précédemment, caractérisé en ce que lorsque C1 est strictement supérieure à 0,5% molaire et inférieure ou égale à 1% molaire, le courant gazeux issu de l'étape a) appauvri en CO₂ mis en oeuvre à l'étape b) est introduit dans la colonne de distillation au niveau du plateau n, le plateau n étant le plateau situé le plus haut dans ladite colonne.
- Un procédé tel que défini précédemment, caractérisé en ce que n est compris entre 15 et 100 et en ce que lorsque C1 est inférieure ou égale à 0,1%molaire, le courant gazeux issu de l'étape a) appauvri en CO₂ mis en oeuvre à l'étape b) est introduit dans la colonne de distillation à un niveau compris entre le plateau n-10 et le plateau n-5, le plateau n étant le plateau situé le plus haut dans ladite colonne.
- Un procédé tel que défini précédemment, caractérisé en ce que l'étape a) comprend en outre une étape d'épuration en eau du courant gazeux comprimé à la pression P1.
- Un procédé tel que défini précédemment, caractérisé en ce que ledit courant gazeux issu de l'étape a) appauvri en CO₂ mis en oeuvre à l'étape b) comprend entre 0,3% molaire et 2% molaire de CO₂.
- Un procédé tel que défini précédemment, caractérisé en ce que, lors de l'étape a), la séparation du CO₂ et de l'oxygène du courant gazeux d'alimentation est effectuée par une unité comprenant au moins deux étages de membranes séparatrices.
- Un procédé tel que défini précédemment, caractérisé en ce que la pression P2 de l'étape c) est supérieure à 40 bar abs.
- Un procédé tel que défini précédemment, caractérisé en ce que lors de l'étape b), le courant gazeux appauvri en CO₂ issu de l'étape a) subit une détente jusqu'à une pression P3 comprise entre 15 bar abs et 40 bar abs préalablement à son entrée dans ladite colonne de distillation. De préférence, P3 est supérieure à 25 bars absolus.
- Un procédé tel que défini précédemment, caractérisé en ce que préalablement à la détente, le courant gazeux appauvri en CO₂ issu de l'étape a) est au moins partiellement condensé dans un échangeur de chaleur.
- Un procédé tel que défini précédemment, caractérisé en ce que le courant gazeux appauvri en CO₂ issu de l'étape a) est au moins partiellement condensé dans un échangeur de chaleur à contre-courant du courant enrichi en CH₄ issu de l'étape c) et d'au moins une partie du courant azote séparé lors de l'étape b).

Est également décrit (non compris dans la portée des revendications):
Une installation pour la production de bio méthane par épuration de biogaz issus d'installations de stockage de déchets non-dangereux (ISDND) mettant en oeuvre le procédé tel que défini précédemment.

Une installation telle que définie ci-dessus, pour la production de bio méthane par épuration de biogaz issus d'installations de stockage de déchets non-dangereux (ISDND), comprenant successivement :
- une source de biogaz ;
- une unité de prétraitement pour enlever tout ou partie des COV, l'eau, les composés soufrés du flux gazeux à traiter ;
- au moins deux étages de membranes séparatrices aptes à séparer partiellement le CO₂ et l'O₂ dudit flux gazeux ;
- un compresseur apte à compresser ledit flux gazeux à une pression comprise entre de 25 et 100 bars ;
- un échangeur de chaleur apte à refroidir le flux gazeux appauvri en CO₂,
- une colonne de distillation ;
la colonne de distillation comprenant plateaux le niveau d'introduction du courant à traiter dans ladite colonne dépendant de la concentration en oxygène dudit courant à traiter, n étant un nombre entier compris entre 8 et 100.

L'échangeur de chaleur peut être tout échangeur thermique, toute unité ou autre agencement adapté pour permettre le passage d'un certain nombre de flux, et ainsi permettre un échange de chaleur direct ou indirect entre une ou plusieurs lignes de fluide réfrigérant, et un ou plusieurs flux d'alimentation.

La limitation du nombre de plateaux réels au-dessus de l'injection dans la colonne à distiller du gaz à traiter (maximum de 4 plateaux réels) lorsque C1 est supérieure à 0,1% molaire permet de limiter la création d'un ventre oxygène dans la colonne.

Le gaz à traiter est donc refroidi partiellement ou totalement liquéfié dans la ligne d'échange. Il est ensuite détendu à la pression de distillation. Le gaz partiellement ou totalement liquéfié est détendu et ensuite injecté dans la colonne à distiller. Cette injection est réalisée soit directement en tête au niveau d'un des 4 plateaux de tête de la colonne.

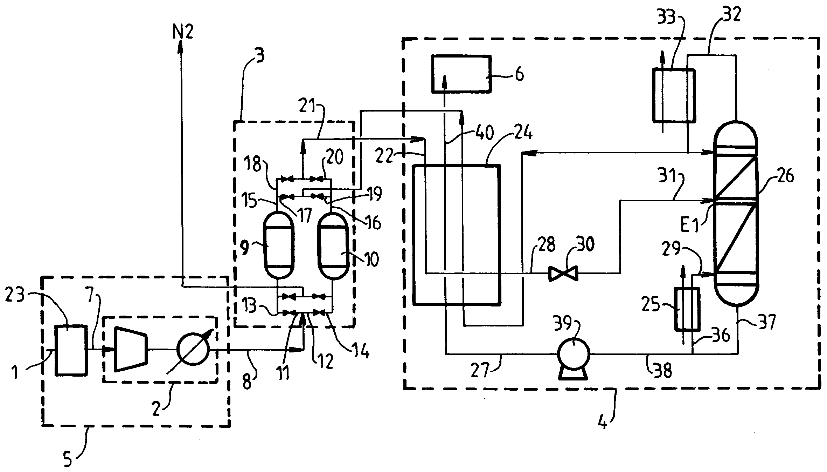

L'invention sera décrite de manière plus détaillée en se référant à la figure qui illustre un mode de réalisation particulier d'un procédé selon l'invention mise en oeuvre par une installation telle que schématisée sur la figure.

On désigne par une même référence un flux liquide et la conduite qui le véhicule, les pressions considérées sont des pressions absolues et les pourcentages considérés sont des pourcentages molaires.

Sur la figure, L'installation comprend une source de biogaz à traiter (1), une unité de prétraitement (5) comprenant une unité de compression (2) et une unité d'épuration de CO₂ et d'O₂ (23), une unité d'épuration de COV et d'eau (3), une unité de cryodistillation (4), et enfin une unité de récupération du méthane gazeux (6). Tous les appareils sont reliés entre eux par des tuyaux.

En amont de l'unité de compression (2) se situe l'unité d'épuration de CO₂ (23) et des éventuelles unités de prétraitement préalables.

L'unité d'épuration de CO₂ (23) combine, par exemple, deux étages de séparation membranaire. Les membranes sont choisies pour permettre la séparation d'au moins 90% du CO₂ et d'environ 50% de l'O₂. Le retentat issu de la première séparation est ensuite dirigé vers la seconde séparation membranaire. Le perméat issu de la seconde séparation membranaire est recyclé par le biais d'un tuyau connecté au circuit principal en amont du compresseur. Cette étape permet de produire un gaz (7) avec moins de 3% de CO₂ et avec un rendement CH₄ supérieur à 90%. La température de ce courant est typiquement ambiante, si nécessaire des étapes de refroidissement à l'air ou à l'eau peuvent être incorporées.

L'unité de compression (2) se présente par exemple sous la forme d'un compresseur à piston.

Ce compresseur comprime le flux gazeux (7) à une pression comprise par exemple entre 50 et 80 bars. Le flux sortant est désigné sur la figure par la référence (8).

L'unité d'épuration (TSA) de COV et d'eau (3) comprend deux bouteilles (9, 10). Elles sont chargées en adsorbants choisis spécifiquement pour autoriser l'adsorption de l'eau et des COV's, et leur désorption ultérieure lors de la régénération. Les bouteilles fonctionnent alternativement en mode production et en mode régénération.

En mode production, les bouteilles (9, 10) sont alimentées en flux gazeux au niveau de leur partie inférieure. Le tuyau dans laquelle circule le flux gazeux (8) se dédouble en deux tuyaux (11, 12), chacun équipé d'une vanne (13, 14) et alimentant la partie inférieure respectivement de la première bouteille (9) et de la deuxième bouteille (10). Les vannes (13, 14) seront alternativement fermées en fonction du niveau de saturation des bouteilles. En pratique, lorsque la première bouteille est saturée en eau, on ferme la vanne (13) et on ouvre la vanne (14) pour commencer à charger la seconde bouteille (10). De la partie supérieure de chacune des bouteilles débouche un tuyau respectivement (15 et 16). Chacun d'entre eux se dédouble en deux tuyaux respectivement (17, 18) et (19, 20). Le flux épuré en eau et en COV provenant de la première bouteille circule dans le tuyau (18) tandis que le flux épuré en eau et en COV provenant du second PSA circule dans le tuyau (20). Les deux tuyaux sont joints pour ne former qu'une seule conduite (21) alimentant l'unité cryogénique (4).

En mode régénération, le gaz régénératif circule dans les tuyaux (17, 19). Il ressort au niveau de la partie inférieure des bouteilles.

L'unité de cryodistillation (4) est alimentée par le tuyau (21) dans lequel circule le flux gazeux (22) à épurer. Elle contient trois éléments respectivement un échangeur de chaleur (24), un rebouilleur (25), une colonne de distillation (26).

L'échangeur (24) est de préférence un échangeur à plaques brasées en aluminium ou en acier inoxydable. Il refroidit le flux gazeux (22) circulant dans la conduite (21) par échange thermique avec le flux de méthane liquide (27) soutiré de la colonne de distillation (26). Le flux gazeux (22) est refroidi (28) à une température d'environ -100°C. Le flux diphasique (28) en résultant peut alternativement, assurer le rebouillage du rebouilleur de cuve (25) de la colonne (26) et la chaleur produite (29) est transférée à la cuve de la colonne (26).

Le fluide refroidi (28) est détendu au moyen d'une vanne (30) à une pression par exemple comprise entre 20 bars absolus et 45 bars absolus bars absolu. Le fluide alors à l'état diphasique ou à l'état liquide (31) est introduit dans la colonne (26) à un étage E1 situé dans la partie supérieure de ladite colonne (26) à une température, par exemple comprise entre -110°C et-100°C.

Le courant gazeux (22) appauvri en CO₂ introduit dans la colonne (26) à un étage E1, a une concentration en oxygène égale à C1.

Lorsque C1 est strictement supérieure à 1% molaire, le procédé est arrêté.

Lorsque C1 est strictement supérieure à 0,1% molaire, le courant gazeux (22) issu est introduit dans la colonne de distillation à un niveau E1 compris entre le plateau n-4 et le plateau n, le plateau n étant le plateau situé le plus haut dans ladite colonne. Lorsque C1 est strictement supérieure à 0,5% molaire et inférieure ou égale à 1 % molaire, le courant gazeux (22) est introduit dans la colonne de distillation à un niveau E1 du plateau n, le plateau n étant le plateau situé le plus haut dans ladite colonne.

Le liquide (31) se sépare ensuite dans la colonne (26) pour former un gaz (32) par le biais du condenseur (33). Le refroidissement du condenseur (33) peut, par exemple être assuré par un cycle frigorifique utilisant de l'azote et ou du méthane. Une partie (36) du liquide (37) sortant de la cuve de la colonne de distillation (26), à une température comprise entre -120°C et -90°C, est envoyée au rebouilleur (25) où elle se vaporise partiellement. Le gaz formé (29) est renvoyé à la cuve de la colonne (26). L'autre partie (38) du liquide (37) restant est pompée au moyen d'une pompe (39) pour former le flux de méthane liquide (27) qui se vaporise dans l'échangeur (24) pour former un produit de méthane gazeux pur (40).

Cette étape de pompage se déroule à une pression élevée, typiquement au-delà de la pression critique et supérieure à 40 bars absolus, préférentiellement supérieure à 50 bars absolus. Ce niveau de pression permet d'éviter l'accumulation de CO₂ dans la dernière goutte à vaporiser de la ligne d'échange. Le gaz étant très pauvre en hydrocarbures lourds, le point de rosée du gaz en dessous de la pression critique est très bas (typiquement inférieur à - 90°C).

## Revendications

1. Procédé de production de biométhane (40) par épuration d'un courant d'alimentation (1) de biogaz comprenant les étapes suivantes :
Etape a) : introduction du courant gazeux d'alimentation (1) dans une unité de prétraitement (5) dans laquelle ledit courant gazeux est séparé partiellement du CO₂ et de l'oxygène qu'il contient et est comprimé à une pression P1 supérieure à 25 bar abs ;
Etape b) : on soumet le courant gazeux (22) issu de l'étape a) appauvri en CO₂, à une séparation cryogénique dans une colonne de distillation (26) pour séparer l'azote dudit courant gazeux (22), ladite colonne de distillation (26) comprenant n plateaux, n étant un nombre entier compris entre 8 et 100 ;
Etape c) : on récupère un courant (27) enrichi en CH₄ issu de la séparation cryogénique par pompage du produit de cuve (37) de ladite colonne (26) à une pression P2 supérieure à 25 bars absolus et de préférence supérieure à la pression critique dudit produit,
**caractérisé en ce que** le courant gazeux (22) issu de l'étape a) appauvri en CO₂ mis en oeuvre à l'étape b) a une concentration en oxygène égale à C1 et **en ce que**:
- lorsque C1 est strictement supérieure à 1% molaire, le procédé est arrêté ; et
- lorsque C1 est strictement supérieure à 0,1 % molaire, le courant gazeux (22) issu de l'étape a) appauvri en CO₂ mis en oeuvre à l'étape b) est introduit dans la colonne de distillation à un niveau compris entre le plateau n-4 et le plateau n, le plateau n étant le plateau situé le plus haut dans ladite colonne.

2. Procédé selon la revendication précédente, **caractérisé en ce que** lorsque C1 est strictement supérieure à 0,5% molaire et inférieure ou égale à 1% molaire, le courant gazeux (22) issu de l'étape a) appauvri en CO₂ mis en oeuvre à l'étape b) est introduit dans la colonne de distillation au niveau du plateau n, le plateau n étant le plateau situé le plus haut dans ladite colonne.

3. Procédé selon l'une des revendications précédentes **caractérisé en ce que** n est compris entre 15 et 100 et **en ce que** lorsque C1 est inférieure ou égale à 0,1 %molaire, le courant gazeux (22) issu de l'étape a) appauvri en CO₂ mis en oeuvre à l'étape b) est introduit dans la colonne de distillation à un niveau compris entre le plateau n-10 et le plateau n-5, le plateau n étant le plateau situé le plus haut dans ladite colonne.

4. Procédé selon l'une des revendications précédentes, **caractérisé en ce que** P1 est supérieure à 50 bars absolus.

5. Procédé selon l'une des revendications précédentes, **caractérisé en ce que** l'étape a) comprend en outre une étape d'épuration en eau du courant gazeux (8) comprimé à la pression P1.

6. Procédé selon l'une des revendications précédentes, **caractérisé en ce que**, lors de l'étape a), la séparation du CO₂ et de l'oxygène du courant gazeux d'alimentation est effectuée par une unité comprenant au moins deux étages de membranes séparatrices.

7. Procédé selon l'une des revendications précédentes, **caractérisé en ce que** la pression P2 de l'étape c) est supérieure à 40 bar abs.

8. Procédé selon l'une des revendications précédentes, **caractérisé en ce que** lors de l'étape b), le courant gazeux (22) appauvri en CO₂ issu de l'étape a) subit une détente (30) jusqu'à une pression P3 comprise entre 15 bars abs et 40 bars abs préalablement à son entrée dans ladite colonne de distillation (26).

9. Procédé selon la revendication précédente, **caractérisé en ce que** préalablement à la détente (30), le courant gazeux (22) appauvri en CO₂ issu de l'étape a) est au moins partiellement condensé dans un échangeur de chaleur (24).

10. Procédé selon la revendication précédente, **caractérisé en ce que** le courant gazeux (22) appauvri en CO₂ issu de l'étape a) est au moins partiellement condensé dans un échangeur de chaleur (24) à contre-courant du courant (27) enrichi en CH₄ issu de l'étape c) et d'au moins une partie du courant azote séparé lors de l'étape b).

## Patentansprüche

1. Verfahren zur Erzeugung von Biomethan (40) durch Reinigen eines Feedstroms (1) aus Biogas, umfassend die folgenden Schritte:
Schritt a): Einleiten des gasförmigen Feedstroms (1) in eine Vorbehandlungseinheit (5), in welcher der gasförmige Strom teilweise von dem CO₂ und dem Sauerstoff, die er enthält, getrennt wird und auf einen Druck von mehr als 25 bar abs verdichtet wird;
Schritt b): Man unterzieht den aus dem Schritt a) hervorgegangenen, an CO₂ verarmten gasförmigen Strom (22) einer kryogenen Trennung in einer Destillationskolonne (26), um den Stickstoff des gasförmigen Stroms (22) zu trennen, wobei die Destillationskolonne (26) n Böden umfasst, wobei n eine ganze Zahl zwischen 8 und 100 ist;
Schritt c): man gewinnt einen an CH₄ angereicherten, aus der kryogenen Trennung hervorgegangenen Strom (27) durch Pumpen des Sumpfprodukts (37) der Kolonne (26) bei einem Druck P2 über 25 bar absolut und bevorzugt über dem kritischen Druck des Produkts,
**dadurch gekennzeichnet, dass** der aus dem Schritt a) hervorgegangene, an CO₂ verarmte gasförmige Strom (22), der im Schritt b) eingesetzt wird, eine Sauerstoffkonzentration gleich C1 hat und dass:
- wenn C1 strikt größer als 1 Mol-% ist, das Verfahren gestoppt wird; und
- wenn C1 strikt größer als 0,1 Mol-% ist, der aus dem Schritt a) hervorgegangene, an CO₂ verarmte gasförmige Strom (22), der im Schritt b) eingesetzt wird, in die Destillationskolonne auf einer Höhe zwischen dem Boden n-4 und dem Boden n eingeleitet wird, wobei der Boden n der am weitesten oben in der Kolonne gelegene Boden ist.

2. Verfahren nach dem vorhergehenden Anspruch, **dadurch gekennzeichnet, dass**, wenn C1 strikt größer als 0,5 Mol-% und kleiner als oder gleich 1 Mol-% ist, der aus dem Schritt a) hervorgegangene, an CO₂ verarmte gasförmige Strom (22), der im Schritt b) eingesetzt wird, in die Destillationskolonne auf Höhe des Bodens n eingeleitet wird, wobei der Boden n der am weitesten oben in der Kolonne gelegene Boden ist.

3. Verfahren nach einem der vorhergehenden Ansprüche, **dadurch gekennzeichnet, dass** n zwischen 15 und 100 beträgt und dass, wenn C1 kleiner als oder gleich 0,1 Mol-% ist, der aus dem Schritt a) hervorgegangene, an CO₂ verarmte gasförmige Strom (22), der im Schritt b) eingesetzt wird, in die Destillationskolonne auf einer Höhe zwischen dem Boden n-10 und dem Boden n-5 eingeleitet wird, wobei der Boden n der am weitesten oben in der Kolonne gelegene Boden ist.

4. Verfahren nach einem der vorhergehenden Ansprüche, **dadurch gekennzeichnet, dass** P1 mehr als 50 bar absolut beträgt.

5. Verfahren nach einem der vorhergehenden Ansprüche, **dadurch gekennzeichnet, dass** der Schritt a) ferner einen Schritt des Reinigens in Wasser des auf den Druck P1 verdichteten gasförmigen Stroms (8) umfasst.

6. Verfahren nach einem der vorhergehenden Ansprüche, **dadurch gekennzeichnet, dass** beim Schritt a) das Trennen des CO₂ und des Sauerstoffs des gasförmigen Feedstroms durch eine Einheit erfolgt, die mindestens zwei Trennmembranstufen umfasst.

7. Verfahren nach einem der vorhergehenden Ansprüche, **dadurch gekennzeichnet, dass** der Druck P2 des Schritts c) mehr als 40 bar abs beträgt.

8. Verfahren nach einem der vorhergehenden Ansprüche, **dadurch gekennzeichnet, dass** beim Schritt b) der aus dem Schritt a) hervorgegangene, an CO₂ verarmte gasförmige Strom (22) eine Entspannung (30) bis auf einen Druck P3 zwischen 15 bar abs und 40 bar abs vor seinem Eintritt in die Destillationskolonne (26) erfährt.

9. Verfahren nach dem vorhergehenden Anspruch, **dadurch gekennzeichnet, dass** der aus dem Schritt a) hervorgegangene, an CO₂ verarmte gasförmige Strom (22) vor der Entspannung (30) mindestens teilweise in einem Wärmetauscher (24) kondensiert wird.

10. Verfahren nach dem vorhergehenden Anspruch, **dadurch gekennzeichnet, dass** der aus dem Schritt a) hervorgegangene, an CO₂ verarmte gasförmige Strom (22) mindestens teilweise in einem Wärmetauscher (24) im Gegenstrom zu dem aus dem Schritt c) hervorgegangenen, an CH₄ angereicherten Strom (27) und mindestens einem Teil des beim Schritt b) getrennten Stickstoffstroms kondensiert wird.

## Claims

1. Process for producing biomethane (40) by scrubbing a biogas feed stream (1), comprising the following steps:
Step a): introducing the feed gas stream (1) into a pretreatment unit (5) in which said gas stream is partially separated from the CO₂ and the oxygen it contains and is compressed to a pressure P1 above 25 bar abs;
Step b) : subjecting the CO₂-depleted gas stream (22) obtained from step a) to cryogenic separation in a distillation column (26) to separate the nitrogen from said gas stream (22), said distillation column (26) comprising n plates, n being an integer between 8 and 100;
Step c): recovering a CH₄-enriched stream (27) obtained from the cryogenic separation by pumping the product in the vessel (37) of said column (26) at a pressure P2 above 25 bar absolute and preferably above the critical pressure of said product,
**characterized in that** the CO₂-depleted gas stream (22) obtained from step a) and used in step b) has an oxygen concentration equal to C1 and **in that**:
- when C1 is strictly greater than 1 mol%, the process is stopped; and
- when C1 is strictly greater than 0.1 mol%, the CO₂-depleted gas stream (22) obtained from step a) and used in step b) is introduced into the distillation column at a level between plate n-4 and plate n, plate n being the plate that is positioned the highest in said column.

2. Process according to the preceding claim, **characterized in that** when C1 is strictly greater than 0.5 mol% and less than or equal to 1 mol%, the CO₂-depleted gas stream (22) obtained from step a) and used in step b) is introduced into the distillation column at the level of plate n, plate n being the plate that is positioned the highest in said column.

3. Process according to either of the preceding claims, **characterized in that** n is between 15 and 100 and **in that** when C1 is less than or equal to
0.1 mol%, the CO₂-depleted gas stream (22) obtained from step a) and used in step b) is introduced into the distillation column at a level between plate n-10 and plate n-5, plate n being the plate that is positioned the highest in said column.

4. Process according to one of the preceding claims, **characterized in that** P1 is greater than 50 bar absolute.

5. Process according to one of the preceding claims, **characterized in that** step a) also comprises a step of scrubbing the water from the gas stream (8) compressed to the pressure P1.

6. Process according to one of the preceding claims, **characterized in that**, during step a), the separation of the CO₂ and of the oxygen from the feed gas stream is performed by a unit comprising at least two separating membrane stages.

7. Process according to one of the preceding claims, **characterized in that** the pressure P2 of step c) is greater than 40 bar abs.

8. Process according to one of the preceding claims, **characterized in that**, during step b), the CO₂-depleted gas stream (22) obtained from step a) undergoes an expansion (30) to a pressure P3 of between 15 bar abs and 40 bar abs prior to being introduced into said distillation column (26).

9. Process according to the preceding claim, **characterized in that** prior to the expansion (30), the CO₂-depleted gas stream (22) obtained from step a) is at least partially condensed in a heat exchanger (24).

10. Process according to the preceding claim, **characterized in that** the CO₂-depleted gas stream (22) obtained from step a) is at least partially condensed in a heat exchanger (24) counter-currentwise relative to the CH₄-enriched stream (27) obtained from step c) and to at least part of the nitrogen stream separated out during step b).
